Europäisches Patentamt

European Patent Office

Office européen des brevets

(19)

(11) EP 0 473 785 B1

(12) EUROPEAN PATENT SPECIFICATION

(45) Date of publication and mention
of the grant of the patent:
**28.08.1996  Bulletin 1996/35**

(21) Application number: **91903625.1**

(22) Date of filing: **30.01.1991**

(51) Int Cl.6: **G11B 11/10**, G11B 7/00

(86) International application number:
**PCT/JP91/00113**

(87) International publication number:
**WO 91/11807 (08.08.1991 Gazette 1991/18)**

(54) **OPTICAL DISC SYSTEM AND OPTICAL DISC**

OPTISCHES SCHEIBENSYSTEM UND OPTISCHE SCHEIBE

SYSTEME A DISQUES OPTIQUES ET DISQUE OPTIQUE

(84) Designated Contracting States:
**DE FR GB NL**

(30) Priority:  **31.01.1990  JP  21210/90**

(43) Date of publication of application:
**11.03.1992  Bulletin 1992/11**

(60) Divisional application: **96100707.7**

(73) Proprietor: **SONY CORPORATION**
**Tokyo 141 (JP)**

(72) Inventors:
• **WATANABE, Tetsu, Sony Corporation**
**Shinagawa-ku, Tokyo 141 (JP)**
• **AOKI, Yoshio, Sony Corporation**
**Shinagawa-ku, Tokyo 141 (JP)**

(74) Representative: **Müller, Frithjof E., Dipl.-Ing. et al**
**Patentanwälte**
**TER MEER-MÜLLER-STEINMEISTER &**
**PARTNER**
**Mauerkircherstrasse 45**
**81679 München (DE)**

(56) References cited:
| | |
|---|---|
| JP-A- 0 218 720 | JP-A- 5 727 451 |
| JP-A- 6 314 347 | JP-A-55 122 244 |
| JP-A-57 150 158 | JP-A-57 164 418 |
| JP-A-61 242 301 | JP-U- 6 313 421 |
| US-A- 4 807 204 | |

EP 0 473 785 B1

## Description

### Technical Field

The present invention relates to a magneto-optical disc system in accordance with the precharacterizing part of claim 1.

Such a magneto-optical disc system is known from EP-A-0 341 829.

### Background Art

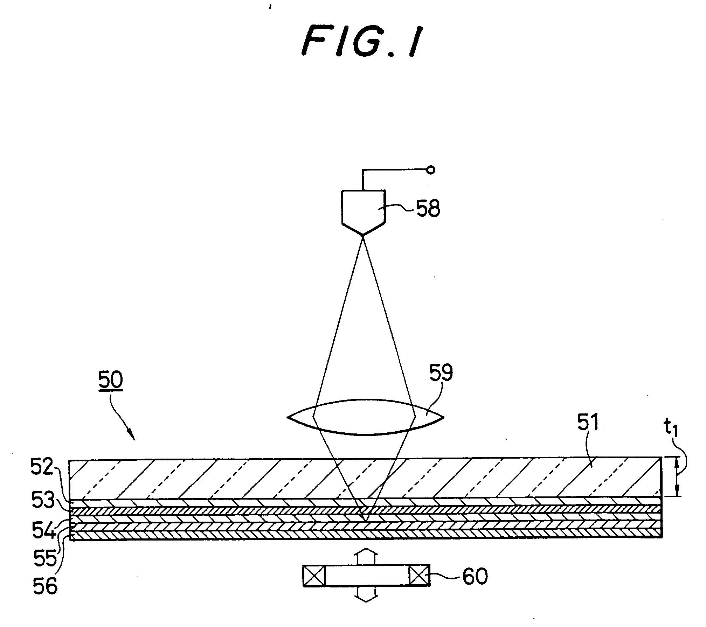

A magneto-optical disc system utilizing a magneto-optical effect is shown in Fig. 1 as an optical disc system for performing recording in and/or reproduction from an optical recording medium such as an optical disc or a magneto-optical disc.

A conventional magneto-optical disc system shown in Fig. 1 is arranged such that when a disc-like one-sided magneto-optical recording medium 50 is mounted, an optical system including a laser unit 58, an objective lens 59, and the like is arranged above the one-sided magneto-optical recording medium 50, and a magnetic field generation unit 60 serving as a magnetic system is arranged below the one-sided magneto-optical recording medium 50. A numerical aperture (to be referred to as an NA hereinafter) of the objective lens 59 is set to fall within the range of 0.50 to 0.53.

In order to drive the optical system in focusing and tracking directions with respect to the magneto-optical recording medium 50, a drive system (not shown) is arranged. Another drive system (not shown) is arranged to drive the magnetic system in a direction indicated by an arrow in Fig. 1 and the tracking direction.

In this magneto-optical disc system, a magnetic field modulation scheme is employed to perform recording. In this magnetic field modulation scheme, high-speed reverse control of a magnetic field must be performed in accordance with an information signal to be recorded. For this reason, a sufficiently large excitation current cannot be obtained. The intensity of the magnetic field generated by the magnetic field generation unit is limited. The magnetic field generation unit 60 is located near a magnetic recording layer 53 (to be described later) in the one-sided magneto-optical recording medium 50. An overwrite operation can be performed according to the magnetic field modulation scheme.

The one-sided magneto-optical recording medium 50 is formed as follows. A dielectric layer 52, a magnetic recording layer 53 having a large mangeto-optical effect and made of, e.g., a rare earth element-transition metal alloy amorphous thin film, a dielectric film 54, a reflecting layer 55, a protective cover 56 are sequentially stacked on one surface of a light-transmitting transparent substrate 50 made of, e.g., polycarbonate. The transparent substrate 51 has a predetermined thickness $t_1$. The thickness of a conventional substrate is set to be 1.2 mm.

An operation of the magneto-optical disc system will be described below.

The one-sided magneto-optical recording medium 50 is placed and driven on a rotary disc (not shown), and a magnetic field is applied from the magnetic field generation unit 60 to the magnetic recording layer 53 of the one-sided magneto-optical recording medium 50. High-speed reverse control of the magnetic field to be applied is performed on the basis of an information signal to be recorded. A laser beam emitted from the laser unit 58 is focused through the objective lens 59 on the magnetic recording layer 53 applied with this magnetic field. A change in direction of magnetization occurs in a region of the magnetic recording layer 53 irradiated with the focused laser beam in accordance with the direction of the magnetic field applied from the magnetic field generation unit 60. Therefore, an overwrite operation of an information signal can be performed in real time.

In order to obtain a more compact magneto-optical pickup, which is constituted by the optical system, the magnetic system, and the drive systems for driving the optical and magnetic systems, it is assumed that the optical system may be formed integrally with the magnetic system and both the systems are arranged on the one side of the magneto-optical recording medium. More specifically, the magnetic field generation unit 60 of Fig. 1 is located on the side where the objective lens 59 is located (i.e., the side of the transparent substrate 51). However, since a distance between the magnetic field generation unit 60 and the magnetic recording layer 53 becomes larger than before, a sufficient high magnetic field cannot be applied to the magnetic recording layer 53.

Along with an increase in information volume in recent years, a two-sided magneto-optical recording medium has been developed, in which the magnetic recording layers are formed respectively on both surfaces of one magneto-optical recording medium so as to be capable of recording information signals on each of the surfaces.

In order to perform recording in and/or reproduction from such two-sided magneto-optical recording medium, it is very difficult to apply a sufficiently high magnetic field to each of the magnetic recording layers by means of the magneto-optical pickup of Fig. 1, constituted by the optical and magnetic systems. The reason for this is such that in the magnetic field generation unit of a magnetic field modulation scheme, a high-frequency current corresponding to a high-frequency data signal that is an information signal to be recorded must be supplied to an electromagnetic coil. A current tends to become difficult to flow through an electromagnetic coil as the frequency of the current increases, so that the generated magnetic field is limited. In addition, it is the other reason that the distance the magnetic field generation unit and each magnetic recording layer is rather large. Therefore, in state-of-the-art techniques, it is very difficult to perform two-side optomagnetic recording under the magnetic field modulation scheme.

The magneto-optical disc system which is known from EP-A-0 341 829 proposes to reduce the size of a magneto-optical pick-up by increasing the numerical aperture lying in the range of 0,50 to 0,65 (preferably 0,55) and thereby reducing the focal length of an objective lens of a magneto-optical pick-up to stabilize the flying height. Further, the known magneto-optical disc system proposes to arrange the objective lens on an air-bearing slider, the optical height of which is determined by aerodynamic considerations and not data density considerations. It is remarkable that the known system works is constructed so that it works with a magneto-optical disc having its magneto-optical layer on only one side of a substrate.

Disclosure of the Invention

It is, therefore, an object of the present invention to provide a large-capacity optical disc system capable of performing recording and/or reproduction in higher density with a magneto-optical pick-up unit having minimum size.

According to an essential aspect of the present invention, a magneto-optical disc system comprising a magneto-optical pick-up unit and a magneto-optical disc for recording information signals in said magneto-optical disc according to a magnetic field modulation scheme and/or reproducing information signals from said magneto-optical disc, said magneto-optical disc having a magneto-optical recording layer to be irradiated by a laser beam through said pick-up unit, and said pick-up unit having magnetic field applying means arranged near an objective lens of said magneto-optical pick-up unit for recording or reproduction, said magneto-optical disc further having a light-transmitting cover formed to cover said magneto-optical recording layer and transmitted by said laser beam, and said magneto-optical recording layer and said light-transmitting cover being disposed on at least one side of a substrate of said magneto-optical disc, wherein a numerical aperture of said objective lens falls within a range of 0,55 to 0,70;
is characterized in that
said magneto-optical disc system comprises a pair of said magneto-optical pick-up units each of which includes laser beam generating beams for generating said laser beam, an objective layer for focusing said laser beam on said magneto-optical recording lens through said light-transmitting cover and magnetic field applying means to apply a magnetic field to the respective one of the magneto-optical recording layers being disposed on both sides of said substrate, and said pair of magneto-optical pick-up units are arranged on opposite sides of said magneto-optical disc so as to face each other; the thickness of said light-transmitting cover also being disposed on both sides of said magneto-optical disc falls within a range of 0,6 to 0,1 mm, wherein the combination of the magnetic field modulation scheme, the construction of the magneto-optical disc and the arrangement of magneto-optical pick-up units is either for simultaneous recording in or reproduction from both surfaces of the magneto-optical disc or for recording in one surface and reproduction from the other surface and vice versa.

When the laser beam is bundled or focused by the objective lens, the convergent rays have a minimum diameter ($2\omega_0$) represented by equation (1) below:

$$2\omega_0 = 0,82 \times \lambda/NA \qquad (1)$$

($\lambda$: wavelength of laser beam)

Since the numerical aperture NA of the objective lens is larger than a value falling within the conventional NA range of 0,50 to 0,53, the minimum diameter of the convergent rays is decreased, so that the recording density is increased. Therefore, reproduction corresponding to this high recording density can be performed.

As the NA is increased, the thickness of the objective lens is increased, but the thickness of the light-transmitting cover of the optical disc is smaller than the conventional thickness (1,2 mm), so that the objective lens having a larger thickness will not be brought into contact with the optical disc.

As the NA of the objective lens and the thickness $t$ of the light-transmitting cover of the optical disc are changed, the aberration values of the objective lens are changed as follows.

(A) Spherical Aberration $W_{40}$

$$W_{40} = \frac{t}{8} \cdot \frac{N^2 - 1}{N^3} \cdot \sin^4\alpha \qquad (2)$$

($\sin\alpha = NA$)
(N: refractive index of light-transmitting cover of the optical disc)

(B) Coma $W_{31}$

$$W_{31} = \frac{t}{2} \cdot \frac{\left(N^2 - 1\right)N^2 \sin\theta\cos\theta}{\left(N^2 - \sin^2\theta\right)^{5/2}} \cdot \sin^3\alpha \qquad (3)$$

($\theta$: skew)

The spherical aberration (A) can be corrected by the objective lens and does not pose any decisive problem. If the thickness $t$ of the light-transmitting cover is, however, dispersive, problems may be presented. Therefore, the thickness $t$ is preferably set to fall within the tolerance.

The coma (B) cannot be corrected by the objective lens. It is preferable to make the absolute value of the coma as small as possible. Even if the numerical aperture NA increases, the thickness $t$ of the light-emitting cover becomes small, so that the absolute value of the coma $W_{31}$ does not become large.

Each aberration of the objective lens scarcely poses any problem even when the numerical aperture NA is increased. According to the optical disc system described above, recording and/or reproduction can thus be performed in higher density than those or that of a conventional system. According to a preferred embodiment, the magneto-optical disc system according to the invention disposes each of said magnetic field applying means between said objective lens and said magneto-optical disc to face said magneto-optical disc.

Advantageously, said magnetic field applying means is obtained by forming a coil pattern in a light-transmitting glass plate.

According to a further advantageous development, the magneto-optical disc system comprises a magneto-optical disc having a high-permeability layer between said substrate and said magneto-optical recording layer. Thereby, vertical magnetic field efficiency can be advantageously increased.

Advantageously, the light-transmitting cover of the magneto-optical disc comprises a light-transmitting adhesive layer and a light-transmitting plate.

Further, the light-transmitting adhesive layer is advantageously a photo-curable resin.

According to the magneto-optical disc having the recording layers on its both surfaces, and the magneto-optical disc system using this magneto-optical disc, higher-capacity recording and reproduction can be performed.

Brief Description of Drawings

Fig. 1 is a sectional view showing a basic arrangement of a conventional magneto-optical disc system;
Fig. 2 is a sectional view showing a principal arrangement for explaining basic functions of a magneto-optical disc system not belonging to the present invention;
Fig. 3 is a sectional view showing an arrangement of a magneto-optical disc system according to a first embodiment of the present invention;
Fig. 4 is a front view of an optical glass having a coil pattern used in the magneto-optical disc systems of Figs. 2 and 3 and a magneto-optical disc system of Fig. 5; and
Fig. 5 is a sectional view showing the magneto-optical disc system according to a second embodiment of the present invention.

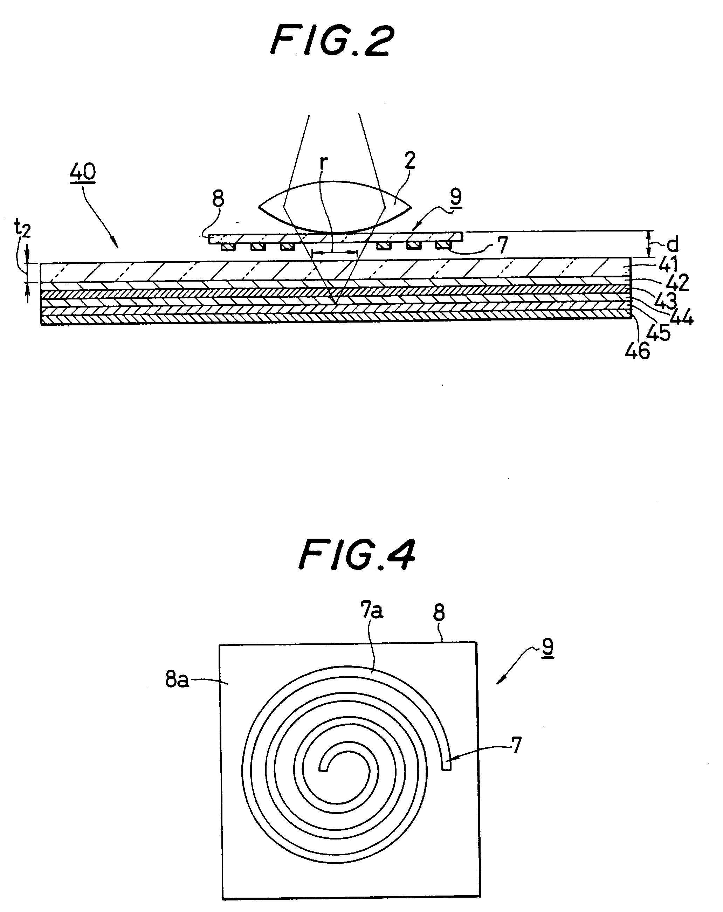

Fig. 2 is a sectional view showing a magneto-optical disc system for explaining the basic arrangement and functions of this magneto-optical disc system of belonging to the invention.

As shown in Fig. 2, this magneto-optical disc system comprises an objective lens 2 having an NA of 0,55 to 0,70 and a magnetic field generating unit 9 constituted by a light-transmitting optical glass 8 having a coil pattern 7.

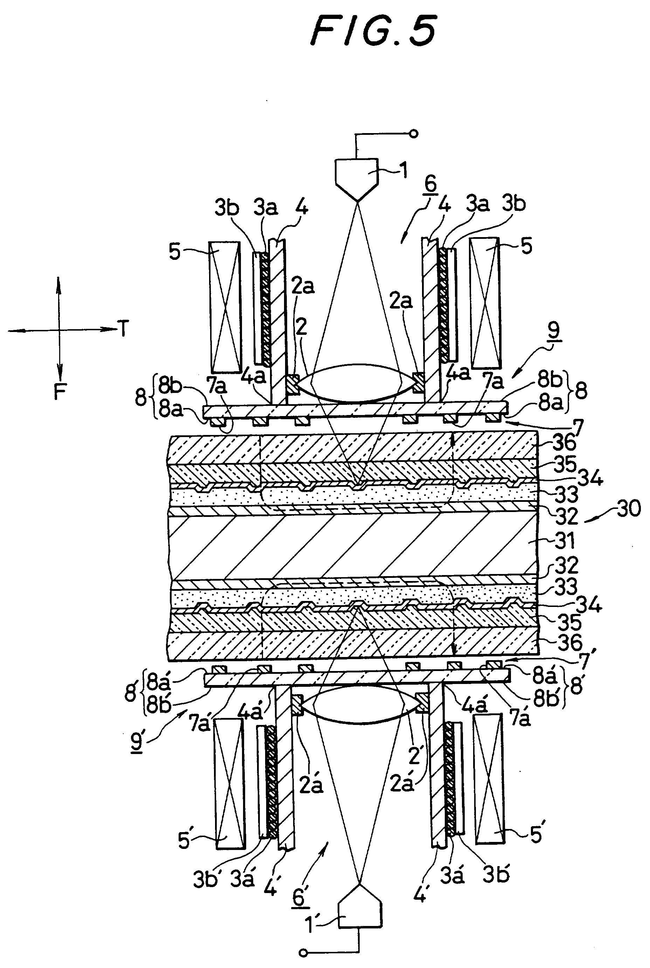

This magneto-optical disc system is arranged to perform recording and reproduction upon radiating a laser beam of the laser beam unit to a disc-like one-sided magneto-optical recording medium 40, which is obtained by sequentially stacking a dielectric layer 42, a magnetic recording layer 43, a dielectric layer 44, a reflecting film 45, and a protective cover 46 on a thin light-transmitting substrate 41 having smaller thickness $t_2$ of 0,1 to 0,6 mm than that of the conventional substrate. The magnetic field generating unit 9 employs a magnetic field modulation scheme and applies a magnetic field to the magnetic recording layer 43 (to be described later in detail with reference to Fig. 4).

The thickness of the dielectric layer 42 is much smaller than the thickness $t_2$, so that it will be neglected with respect to the thickness $t_2$.

The objective lens 2 serving as an optical system and the optical glass 8 serving as a magnetic system are bonded and fixed to a bobbin (not shown) to be integrated. The coil pattern 7 is arranged close to the magneto-optical recording medium 40.

Since the thickness $t_2$ of the light-transmitting substrate 41 is much smaller than the thickness of the conventional substrate, and the coil pattern 7 is located near the light-transmitting substrate 41, a distance between the coil pattern 7 and the magnetic recording layer 43 is preferably made small. Since the optical system can be formed integrally with the magnetic system, a magneto-optical pickup unit constituted by these optical and magnetic systems can be made compact and not expensive. Recording in and reproduction from the double-sided magneto-optical recording media can be performed as will be described in the second and third embodiments.

In a magneto-optical recording medium used in this magneto-optical disc system, for example, a 3,5" magneto-optical disc is a hard disc or is housed in a cartridge holder.

When the NA of the objective lens 2 is increased to fall within the range of 0,55 to 0,70, its focal depth (= $\lambda$/ $NA^2$, $\lambda$: wavelength of laser beam) becomes small. Since the magneto-optical disc is made small as described above, an actuator (not shown) constituting a drive system for the magneto-optical pickup can be made small, and its frequency characteristics can be improved. As this actuator can properly perform tracking control of the magneto-optical pickup, it raises no problem that the focal depth is small.

The spherical aberration $W_{40}$ is corrected by the objective lens 2. As for the coma $W_{31}$, even if the NA of the objective lens is increased as described above, it raises no problem, because the thickness $t_2$ of the light-transmitting substrate is much small.

Numerical apertures NA and thicknesses $\underline{t}$ at the time of the coma $W_{31}$ being equivalent to the coma $W_{31}$ at the time when NA of the objective lens is 0,5 and the thickness $\underline{t}$ of the light-transmitting substrate (light-transmitting cover) is 1,2 mm are obtained in the following four cases.

Table 1

| NA | 0,50 | 0,55 | 0,6 | 0,65 | 0,70 |
|---|---|---|---|---|---|
| t (mm) | 1,2 | 0,9 | 0,69 | 0,55 | 0,44 |

As shown in Table 1, if the thickness $t$ is set to fall within the range of 0,6 to 0,1 mm even when the NA range is 0,55 to 0,70, the coma can be suppressed to a level equal to or lower than that of the conventional case, so that no problem raises.

As the NA of the objective lens 2 is increased, the thickness of the objective lens 2 is increased. However, since the thickness $t_2$ of the transparent substrate is small, a distance $d$ (working distance) between the objective lens 2 and the magneto-optical recording medium 40 increases more than predetermined value as shown in Fig. 2. The objective lens 2 is not brought into contact with the magneto-optical recording medium 40, and the optical glass 8 can be interposed between the objective lens 2 and the magneto-optical recording medium 40.

Dust as a perplexing problem to an optical disc system can be eliminated when a cartridge or hard disc medium is employed as the magneto-optical recording medium.

The grain size and distribution of the dust are important factors to consider performance of the optical disc system. A radius $r$ (Fig. 1) of a circle formed when a laser beam is projected on the transparent substrate 41 is given as follows:

$$r = t \cdot \tan(\text{arc } \sin(NA/N)) \qquad (4)$$

As is apparent from equation (4), when the thickness $t$ of the light-transmitting cover is decreased, the radius $r$ is also reduced. But the NA is large, so that the radius $r$ cannot be greatly decreased. Therefore, no dust problem is posed.

As described above, in the principal arrangement of the magneto-optical disc system, the NA of the objective lens is set to fall within the range of 0,55 to 0,70 and, at the same time, the thickness $t_2$ of the light-transmitting substrate (light-transmitting cover) is set to fall within the range of 0,6 to 0,1 mm, so that the recording density can be increased $(0,55/0,50)^2$ to $(0,70/0,50)^2$ times, nearly 1,2 to 2 times larger than that of the conventional system, in which an objective lens having an NA of 0,50 is used, as is apparent from equation (1). All the above-mentioned various problems caused by an increase of NA can thus be apparently solved. Therefore, a large storage capacity magneto-optical disc system can be obtained without posing any problem.

Detailed arrangements of the magneto-optical disc system according to the invention will be further given in a first and a second embodiment.

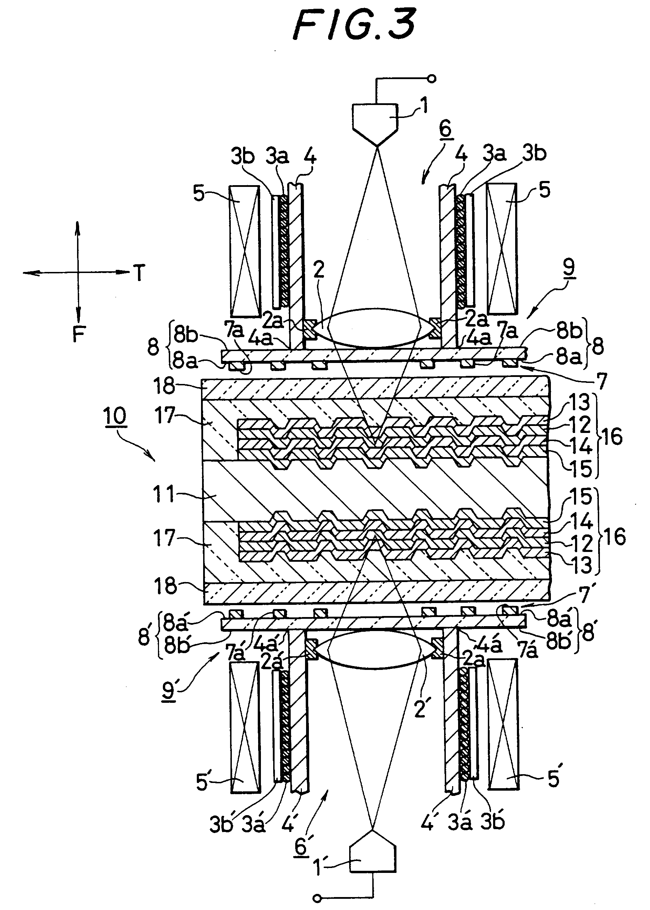

Fig. 3 is a sectional view of a magneto-optical disc system according to the first embodiment of the present invention.

In the first embodiment, a first and a second magneto-optical pickup units, each of which has an optical system and a magnetic system, are arranged on opposite sides of a magneto-optical recording medium 10 so as to face each other as shown in Fig. 3.

The first magneto-optical pickup unit located above the magneto-optical recording medium 10 and the second magneto-optical pickup unit located below the magneto-optical recording medium 10 are substantially the same as described below, and thus, reference numerals 1 to 9 correspond to reference numerals 1' to 9', respectively.

Each of the first and second magneto-optical pickup units of Fig. 3 comprises a pickup that is an optical system and has a laser unit 1, 1', an objective lens 2, 2' having an NA of 0,55 to 0,70, a bobbin 4, 4' on which a focus coil 3a, 3a' and a tracking coil 3b, 3b' are wound, and a magnet 5, 5' which surrounds the bobbin 4, 4', and magnetic field generating units 9, 9'.

The bobbin 4, 4' of the pickup 6, 6' is of cylindrical shape, and on the bobbin 4, 4' are wound the focus coil 3a, 3a' for driving the pickup 6, 6' in a direction of double-headed arrow F in Fig. 3, and the tracking coil 3b, 3b' for driving the pickup 6, 6' in a direction of a double-headed arrow T in Fig. 3. Lens support members 2a and 2a' are arranged adjacent to end portions 4a and 4b' of the coil bobbins 4 and 4', respectively. The objective lenses 2 and 2' for focusing the laser beams emitted from the laser units 1 and 1' are supported by the lens support members 2a and 2a', respectively.

As shown in Fig. 4, the magnetic field generating units 9 and 9' are formed such that conductors 7a and 7a' for generating magnetic fields upon reception of currents of high-frequency signals are formed as spiral coil patterns 7 and 7' in upper surfaces 8a and 8a' of light-transmitting optical glasses 8 and 8' made of, e.g., quartz, respectively. The objective lenses 2 and 2' are positioned on lower surfaces 8b and 8b' having no coil patterns 7 and 7' of the optical glasses 8 and 8' so that the centers of the objective lenses 2 and 2' are aligned with the centers of the coil patterns 7 and 7', respectively. The objective lenses 2 and 2' are fixed near the end portions 4a and 4a' of the coil bobbins 4 and 4' through the lens support members 2a and 2a', respectively. The optical glasses 8 and 8' are adhered to fix to the end portions 4a and 4a' of the coil bobbins 4 and 4', respectively. Therefore, the laser beams can be focused on the centers of the generated magnetic fields, respectively. Thus, any centering process is not needed during assembly of the pickups.

The quartz was used as a material for the optical glasses 8 and 8', but the quartz can be replaced with other materials if they have light-transmitting properties. As the coil patterns 7 and 7', printed coils, thin film coils, or the like may be used for example. Holes for transmitting laser beams from the laser units 1 and 1' may be formed in the optical glasses 8 and 8' so as to prevent the laser beams from being reflected by the surfaces of the optical glasses 8 and 8', respectively.

The first two-sided magneto-optical recording medium 10 shown in Fig. 3 is the one proposed in the specification and drawings of Japanese Patent Application No. 1-142563 filed by the present applicant. Recording portions 16, photo-curable resin layers 17, and transparent protective plates 18 are formed respectively on both surfaces of one substrate 11. Both the transparent protective plates 18 and the photo-curable resin layers 17 have light-transmitting properties and a total thickness thereof can be less than 0.6 mm.

In each of the recording portions 16, the reflecting layer 15 is provided closer to the substrate 11 than a magnetic recording layer 12, and further, the reflecting layer 15, a second dielectric layer 14, the recording layer 12, and a first dielectric layer 13 are stacked in turn from the side of the substrate 11.

In this double-sided magneto-optical recording medium 10, the substrate 11 is used in common, so that the thickness of the recording medium can be made substantially half as compared with that of a conventional double-sided magneto-optical recording medium, in which the two substrates are stuck together.

The function of the first embodiment of the magneto-optical disc system will be described below.

In the first magneto-optical pickup unit, as a current is supplied to the focus coil 3a, the coil bobbin 4 and the magnetic field generating unit 9 integrated with the coil bobbin 4 are driven to displace along the optical axis of the objective lens 2, that is, in a direction of arrow F in Fig. 3. When a current is supplied to the tracking coil 3b, the coil bobbin 4 and the magnetic field generating unit 9 are driven to displace in a direction perpendicular to the optical axis of the objective lens 2, which is indicated by arrow T in Fig. 3.

Similarly, the second magneto-optical pickup unit is driven to displace in the directions of arrows F and T synchronously with the displacement of the first magneto-optical pickup unit.

At the same time high-frequency current of signals obtained by amplifying signals to be recorded is supplied to the coil patterns 7 and 7' of the magnetic field generating units 9 and 9', which are made of the conductors 7a and 7a', so that magnetic fields are generated, respectively. These magnetic fields are obtained by high-speed reverse controls exercised in accordance with the recording signals, and are applied to the magnetic recording layers 12 and 12' of the double-sided magneto-optical recording medium 10. The laser beams emitted from the laser units 1 and 1' are focused on areas of the magnetic recording layers 12 and 12', where the magnetic fields are applied to, through the objective lenses 2 and 2' and the light-transmitting optical glasses 8 and 8'. The temperatures of the magnetic recording layers 12 and 12' are raised over the Curie point to perform recording the information signals.

As is apparent from the above description, the magneto-optical disc system given in the first embodiment is arranged such that each optical system comprising the pickup 6, 6' which has the laser unit 1, 1'; the objective lens 2, 2' and so forth, and the magnetic system comprising the magnetic field generating unit 9, 9', which is formed by providing the coil pattern 7, 7' in the optical glass 8, 8', are respectively arranged on the same side with respect to the double-sided magneto-optical recording medium 10. Thus, the distance between the coil pattern 7, 7' and the magneto-optical recording medium 10 can be shortened. Since the thickness of the light-transmitting cover comprising the transparent protective plate 18 and the photo-curable resin layer 17 is small, the distances between the coil pattern 7, 7' and the magneto-optical recording layer 12 of the magneto-optical recording medium 10 can be much shortened, so that recording in the double-sided magneto-optical recording medium 10 by means of the magneto-optical modulation scheme can be performed, though in the conventional case, it has been difficult so far.

If the coil bobbin 4, 4' of the pickup 6, 6', and the magnetic field generating unit 9, 9', are stuck together, for example, by an adhesive or the like, the center of the objective lens 2, 2' is easily aligned with the center of the magnetic field of the magnetic field generating unit 9, 9'. Since the pickup 6, 6' is interlocked with the magnetic field generating unit 9, 9' by a focus servo, the intensity of the magnetic field applied to the double-sided magneto-optical recording medium 10 can always be made constant. A drive system for driving the magnetic system, which is required in a conventional case, can be omitted. Since the space of the magneto-optical pickup unit can be saved, freedom in design can be increased.

According to the first embodiment, recording in or reproduction from the double-sided magneto-optical recording medium 10 can be variously performed. For example, if the laser units 1 and 1' and the magnetic field generating units 9 and 9' are simultaneously used, simultaneous recordings in the respective upper and lower surfaces of the double-sided magneto-optical recording medium 10 can be performed. When both the laser units 1 and 1' are simultaneously used, simultaneous reproduction can be performed. A large storage capacity recording medium can be obtained, and high-speed recording and reproduction of information signals can be performed.

After recording in or reproduction from one surface of the double-sided magneto-optical recording medium 10 is performed, recording in or reproduction from the other surface can be performed. The capacity of recording and reproduction can be doubled as compared with that of a one-sided magneto-optical recording medium.

In the above case, when recording in one surface is being performed, it is possible to put both the magnetic field generating units 9 and 9' in action, and thereby, apply the two magnetic fields to one of the magnetic recording layers 12 from above and below the layer. Thus, the recording can be made in a stronger magnetic field.

Recording can be performed by using only one of the magnetic field generating units located near one side of the medium when the recording is being performed on the other side thereof.

The second embodiment will be described below. In this embodiment, the same pick up unit as illustrated in Fig. 3 is used as shown in Fig. 5, but recording and reproduction can be performed on a second double-sided magneto-optical recording medium 30 shown in Fig. 5.

The second double-sided magneto-optical recording medium 30 was disclosed in the specification and drawings of Japanese Patent Application No. 1-274734 filed by one of the inventors of this application and other persons. In the recording medium 30, a high-permeability layer 32, a photo-curable resin layer 33, a magneto-optical recording layer 34, an adhesive layer 35, and a transparent protective plate 36 are sequentially stacked on each of the surfaces of a single substrate 31. Both the transparent protective plate 36 and the adhesive layer 35 have light-transmitting properties, and a total thickness thereof is 0.6 mm or less.

The high-permeability layer 32 is made of a transition metal such as Fe, Co, Ni or the like, or an alloy of the transition metals, such as Permalloy, Sendust, or an amorphous magnetic alloy. Vertical magnetic field efficiency along the vertical direction of the double-sided magneto-optical recording medium 30 can be increased.

In the second embodiment, the second double-sided magneto-optical recording medium 30 has the high-permeability layer 34, so that magnetic flux from the magnetic field generating units 9 and 9' forms a closed magnetic loop as indicated by a broken line in Fig. 5 for example. In the recording mode, the magnetic flux applied to the double-sided magneto-optical recording medium 30 can thus be effectively bundled and preferably increase the vertical magnetic field efficiency.

Also in the second embodiment, recording in or reproduction from both surfaces of the double-sided magneto-optical recording medium 30 can be simultaneously performed. Further, as recording in or reproduction from one surface is performed, recording in or reproduction from the other surface can be performed.

As described above, in the first and second embodiments, the numerical aperture NA of the objective lens 2, 2' is increased as explained in the principal arrangement shown in Fig. 2, so that high-density recording and reproduction are possible. At the same time, the double-sided magneto-optical recording medium can be used, so that high storage capacity, higher-speed recording and reproduction are possible. Thus, a large storage capacity magneto-optical disc system can be proposed.

In the first and second embodiments, the magnetic field generating unit 9, 9' utilized the magnetic field modulation scheme, but another scheme such as an optical modulation scheme can be utilized by the magnetic field generating unit 9, 9'.

According to the optical disc system of the present invention, the NA of the objective lens for focusing the laser beam is increased, and the thickness of the light-transmitting cover of the optical disc is decreased, so that recording and/or reproduction can be performed in higher density, and large-capacity recording can be realized.

## Claims

1. A magneto-optical disc system comprising a magneto-optical pick-up unit (6, 6') and a magneto-optical disc (10; 30) for recording information signals in said magneto-optical disc (10; 30) according to a magnetic field modulation scheme and/or reproducing information signals from said magneto-optical disc (10; 30), said magneto-optical disc (10; 30) having a magneto-optical recording layer (16; 34) to be irradiated by a laser beam through said pick-up unit (6, 6'), and said pick-up unit (6, 6') having magnetic field applying means (9, 9') arranged near an objective lens (2, 2') of said magneto-optical pick-up unit (6, 6') for recording or reproduction, said magneto-optical disc (10; 30) further having a light-transmitting cover (17, 18; 35, 36) formed to cover said magneto-optical recording layer and transmitted by said laser beam, and said magneto-optical recording layer (16; 34) and said light-transmitting cover (17, 18; 35, 36) being disposed on at least one side of a substrate (11; 31) of said magneto-optical disc (10; 30), wherein a numerical aperture (NA) of said objective lens (2, 2') falls within a range of 0,55 to 0,70; characterized in that said magneto-optical disc system comprises a pair of said magneto-optical pick-up units (6, 6') each of which includes laser beam generating beams (1, 1') for generating said laser beam, an objective lens (2, 2') for focusing said laser beam on said magneto-optical recording layer (16; 34) through said light-transmitting cover (17, 18; 35, 36) and magnetic field applying means (9, 9') to apply a magnetic field to the respective one of the magneto-optical recording layers (16, 34) being disposed on both sides of said substrate (11), and said pair of magneto-optical pick-up units (6, 6') are arranged on opposite sides of said magneto-optical disc (10, 30) so as to face each other and; the thickness of said light-transmitting cover (17, 18; 35, 36) also being disposed on both sides of said magneto-optical disc (10; 30) falls within a range of 0,6 to 0,1 mm, wherein the combination of the magnetic field modulation scheme, the construction of the magneto-optical disc and the arrangement of magneto-optical pick-up units is either for simultaneous recording in or reproduction from both surfaces of the magneto-optical disc or for recording in one surface and reproduction from the other surface and vice versa.

2. The magneto-optical disc system according to claim 1, wherein each of said magnetic field applying means (9, 9') is located between said objective lens (2, 2') and said magneto-optical disc (10; 30) and faces said magneto-optical disc (10; 30).

3. The magneto-optical disc system according to claim 1, wherein said magnetic field applying means (9, 9') is obtained by forming a coil pattern (7a, 7a') in a light transmitting glass plate (8, 8').

4. The magneto-optical disc system according to claim 1, wherein said magneto-optical disc (30) has a high-permeability layer (32) between said substrate and said magneto-optical recording layer (34).

5. The magneto-optical disc system according to one of the claims 1 to 4, wherein said light transmitting cover (17, 18; 35, 36) comprises a light transmitting adhesive layer (17; 35) and a light transmitting protective plate (18; 36).

6. The magneto-optical disc system according to claim 5, wherein said light transmitting adhesive layer (17; 35) is a photo-curable resin.


**Patentansprüche**

1. Magnetooptisches Scheibensystem mit einer magnetooptischen Tastkopfeinheit (6, 6') und einer magnetooptische Scheibe (10; 30) zur Aufzeichnung von Informationssignalen in der magnetooptischen Scheibe (10; 30) entsprechend einem Magnetfeld-Modulationsverfahren und/oder zur Wiedergabe von Informationssignalen von der magnetooptischen Scheibe (10; 30), wobei die magnetooptische Scheibe (10; 30) eine von einem Laserstrahl durch die Tastkopfeinheit (6, 6') zu bestrahlende magnetooptische Aufzeichnungsschicht (16; 34) hat, und die Tastkopfeinheit (6, 6') hat Einrichtungen (9, 9') zum Anlegen eines magnetischen Feldes neben einer Objektivlinse (2, 2') der magnetooptischen Tastkopfeinheit (6, 6'), die zur Aufzeichnung oder zur Wiedergabe vorgesehen ist, und die magnetooptische Scheibe (10, 30) besitzt außerdem eine lichtdurchlässige Abdeckung (17, 18; 35, 36), die zur Abdeckung der magnetooptischen Aufzeichnungsschicht ausgebildet ist und vom Laserstrahl durchdrungen wird, und die mangetooptische Aufkeichnungsschicht (16; 34) und die lichtdurchlässige Abdeckung (17, 18; 35, 36) sind auf wenigstens einer Seite eines Trägers (11; 31) der magnetooptischen Scheibe (10; 30) aufgeschichtet, wobei die numerische Apertur (NA) der Objektivlinse (2, 2') in einen Bereich von 0,55 bis 0,70 fällt, **dadurch gekennzeichnet,** daß das magnetooptische Scheibensystem ein Paar von den magnetooptischen Tasteinrichtungen (6, 6') enthält, von denen jede eine Laserstrahl-Erzeugungseinrichtung (1, 1') zur Erzeugung des Laserstrahls, eine Objektivlinse (2, 2') zur Fokusierung des Laserstrahls auf die magnetooptische Aufzeichnungsschicht (16, 34) durch die lichtdurchlässige Abdeckung (17, 18, 35, 36) und Einrichtungen (9, 9') zum Anlegen eines Magnetfeldes hat, um ein Magnetfeld an jeweils eine der magnetooptischen Aufzeichnungsschichten (16; 34) anzulegen, die auf beiden Seiten des Trägers (11) aufgeschichtet sind, und das Paar magnetooptischer Tastkopfeinheiten (6, 6') ist an gegenüberliegenden Seiten der magnetooptischen Scheibe (10, 30) einander gegenüberstehend angeordnet; und daß die Dicke der lichtdurchlässigen Abdeckung (17, 18; 35, 36), die ebenfalls auf beiden Seiten der magnetooptischen Scheibe (10; 30) aufgeschichtet ist, in einen Bereich von 0,6 bis 0,1 mm fällt, wobei die Kombination des Magnetfeld-Modulationsverfahrens, der Aufbau der magnetooptischen Scheibe und die Anordnung von magnetooptischen Tastkopfeinheiten entweder für gleichzeitige Aufzeichnung auf oder Wiedergabe von beiden Oberflächen der magnetooptischen Scheibe oder für die Aufzeichnung auf einer Oberfläche und die Wiedergabe von der anderen Oberfläche, und umgekehrt, vorgesehen sind.

2. Magnetooptisches Scheibensystem nach Anspruch 1, bei dem jede der Einrichtungen (9, 9') zum Anlegen eines magnetischen Feldes zwischen der Objektivlinse (2, 2') und der magnetooptischen Scheibe (10; 30) positioniert ist und auf die magnetooptische Scheibe (10; 30) ausgerichtet ist.

3. Magnetooptisches Scheibensystem nach Anspruch 1, bei dem die Einrichtungen (9, 9') zum Anlegen eines Magnetfeldes durch Ausbildung eines spiralRörmigen Musters (7a, 7a') in einer lichtdurchlässigen Glasplatte (8, 8') erhalten werden.

4. Magnetooptisches Scheibensystem nach Anspruch 1, bei dem die magnetooptische Scheibe (30) eine hochpermeable Schicht (32) zwischen dem Träger und der magnetooptischen Aufzeichnungsschicht (34) aufweist.

5. Magnetooptisches Scheibensystem nach einem der Ansprüche 1 bis 4, bei dem die lichtdurchlässige Abdeckung (17, 18; 35, 36) eine lichtdurchlässige Klebeschicht (17; 35) und eine lichtdurchlässige Schutzplatte (18; 36) umfaßt.

**6.** Magnetooptisches Scheibensystem nach Anspruch 5, bei dem die lichtdurchlässige Klebeschicht (17; 35) aus einem foto-heilbaren Harz besteht.

## Revendications

**1.** Système à disque magnéto-optique comprenant un capteur magnéto-optique (6, 6') et un disque magnéto-optique (10; 30) pour enregistrer des signaux d'information sur ledit disque magnéto-optique (10; 30) conformément à un schéma de modulation de champ magnétique et/ou reproduire des signaux d'information à partir du disque magnéto-optique (10; 30) possédant une couche d'enregistrement magnéto-optique (16; 34) devant être irradiée par un faisceau laser par l'intermédiaire dudit capteur (6, 6'), et ledit capteur (6, 6') possédant des moyens d'application de champ magnétique (9, 9') agencés près de l'objectif (2, 2') dudit capteur magnéto-optique (6, 6') pour un enregistrement ou une reproduction, ledit disque magnéto-optique (10; 30) possédant en outre un recouvrement transparent (17, 18; 35, 36) formé pour recouvrir ladite couche d'enregistrement magnéto-optique et émis par ledit faisceau laser, et ladite couche d'enregistrement magnéto-optique (16; 34) et ledit recouvrement transparent (17, 18; 35, 36) étant disposés sur au moins une face du substrat (11; 31) dudit disque magnéto-optique (10; 30), dans lequel une ouverture numérique (NA) dudit objectif (2, 2') se trouve dans une plage allant de 0,55 à 0,70;
caractérisé en ce que
ledit système à disque magnéto-optique comprend une paire desdits capteurs magnéto-optiques (6, 6') dont chacun comprend des moyens de génération de faisceau laser (1, 1') pour générer ledit faisceau laser, un objectif (2, 2') pour concentrer ledit faisceau laser sur ladite couche d'enregistrement magnéto-optique (16; 34) par l'intermédiaire dudit recouvrement transparent (17, 18; 35, 36) et des moyens d'application de champ magnétique (9, 9') pour appliquer un champ magnétique à l'une respective des couches d'enregistrement magnéto-optique (16; 34) étant disposés sur les deux faces dudit substrat (11), et ladite paire de capteurs magnéto-optiques (6, 6') sont disposés sur des côtés opposés dudit disque magnéto-optique (10; 30) de manière à se faire face et; l'épaisseur dudit recouvrement transparent (17, 18; 35, 36) étant également répartie sur les deux côtés dudit disque magnéto-optique (10; 30) se trouve dans une plage comprise entre 0,6 et 0,1 mm, dans lequel la combinaison du schéma de modulation de champ magnétique, la structure du disque magnéto-optique et l'agencement des capteurs magnéto-optiques sont, soit pour un enregistrement sur ou reproduction simultanés à partir des deux surfaces du disque magnéto-optique, soit pour un enregistrement sur une surface et une reproduction à partir de l'autre surface et vice versa.

**2.** Système à disque magnéto-optique selon la revendication 1, dans lequel chacun des moyens d'application de champ magnétique (9, 9') est situé entre ledit objectif (2, 2') et ledit disque magnéto-optique (10; 30) et fait face audit disque magnéto-optique (10; 30).

**3.** Système à disque magnéto-optique selon la revendication 1, dans lequel lesdits moyens d'application de champ magnétique (9, 9') sont obtenus en formant une configuration hélicoïdale (7a, 7a') dans une plaque de verre transparente (8, 8').

**4.** Système à disque magnéto-optique selon la revendication 1, dans lequel ledit disque magnéto-optique (30) possède une couche hautement perméable (32) entre ledit substrat et ladite couche d'enregistrement magnéto-optique (34).

**5.** Système à disque magnéto-optique selon l'une des revendications 1 à 4, dans lequel ledit recouvrement transparent (17, 18; 35, 36) comprend une couche adhésive transparente (17; 35) et une plaque protectrice transparente (18; 36).

**6.** Système à disque magnéto-optique selon la revendication 5, dans lequel la couche adhésive transparente (17; 35) est une résine photo-durcissable.

# FIG. 1

# FIG.2

# FIG.4

# FIG.3

# FIG.5